# DEMANDE DE BREVET EUROPEEN

(11) **EP 2 374 952 A1**
(43) Date de publication de la demande: **12.10.2011**
(21) Numéro de dépôt: 11160652.1
(22) Date de dépôt: 31.03.2011
(51) Int. Cl.: E04B 2/92, F24J 2/04

(54) **Elément de façade préfabriqué**

(30) Priorité: 01.04.2010 FR 1052464
(71) Demandeur: Serrurerie Allouis, 69120 Vaulx en Velin (FR)
(72) Inventeur: Allouis, Didier, 69150 Decines Charpieu (FR)
(74) Mandataire: Chevalier, Renaud Philippe

(57) **Abrégé**

Cet élément (1) de façade préfabriqué comporte un cadre (2) de support, une armature (3) montée à l'intérieur du cadre, comportant au moins un bras et délimitant au moins deux ouvertures, au moins un panneau solaire (4) conformé pour recouvrir au moins l'une des ouvertures, des moyens de maintien fixés sur le cadre et/ou l'armature et agencés pour maintenir en position chaque panneau solaire en regard d'au moins une des ouvertures.

## Description

La présente invention se rapporte à un élément de façade préfabriqué ainsi qu'à une façade préfabriquée comportant de tels éléments.

Dans une démarche de haute qualité environnementale, les façades d'un bâtiment doivent être isolées thermiquement afin de réduire leur déperdition d'énergie. L'ajout de panneaux solaires thermiques et/ou photovoltaïques aux façades contribue à la réalisation d'un bâtiment à énergie positive, c'est-à-dire produisant plus d'énergie qu'il n'en consomme pour son fonctionnement.

Il est connu de l'état de la technique de monter des panneaux solaires sur des éléments de structure de la façade *in situ,* c'est-à-dire sur le site de construction de la façade. Outre les problèmes logistiques liés au transport et au stockage des panneaux solaires, un tel montage des panneaux solaires peut occasionner des difficultés supplémentaires pour un opérateur poseur de panneaux.

En particulier, l'opérateur peut être confronté à des problèmes d'accessibilité à la façade nécessitant l'utilisation d'échafaudages lorsque la façade présente une surface importante pouvant atteindre plusieurs centaines de mètres carré. Il en résulte un temps de travail important revenant à un coût de la construction de la façade élevé.

Par ailleurs, la mise aux dimensions des éléments de structure avec les panneaux solaires peut s'avérer problématique à cause des dimensions prédéterminées des panneaux solaires qui ne peuvent être découpés contrairement à des panneaux en bois ou en verre par exemple.

La présente invention vise à remédier aux inconvénients précités et concerne un élément de façade préfabriqué caractérisé en ce qu'il comporte :
- un cadre de support,
- une armature montée à l'intérieur du cadre, comportant au moins un bras et délimitant au moins deux ouvertures,
- au moins un panneau solaire conformé pour recouvrir au moins l'une des ouvertures,
- des moyens de maintien fixés sur le cadre et/ou l'armature et agencés pour maintenir en position chaque panneau solaire en regard d'au moins une des ouvertures.

Ainsi, un tel élément de façade préfabriqué permet d'intégrer chaque panneau solaire au cadre et/ou à l'armature. La fixation des moyens de maintien sur le cadre et/ou l'armature permet de solidariser chaque panneau solaire au cadre et/ou à l'armature.

Cette intégration de chaque panneau solaire en usine permet de s'affranchir des problèmes logistiques liés au transport et au stockage des panneaux solaires.

De plus, contrairement au montage *in situ* des panneaux solaires, cette intégration de chaque panneau solaire en usine permet de s'affranchir des problèmes d'accessibilité à la façade.

Par ailleurs, un avantage très important réside dans le fait qu'un tel élément peut être décliné dans des dimensions extrêmement variées. En effet, la possibilité de préfabriquer et d'assembler en usine un tel élément, tout en garantissant une mise aux dimensions précise de l'armature avec les panneaux solaires, permet d'obtenir un bloc de façade équivalent à un tronçon d'étage ou un bloc de façade de grandes dimensions pouvant s'étendre par exemple sur au moins un étage entier d'un bâtiment.

Dans un mode de réalisation, l'élément comporte :
- un vitrage translucide monté sur le cadre et/ou l'armature en regard du panneau solaire,
- un panneau translucide, de préférence réalisé en polycarbonate, monté sur le cadre et/ou l'armature entre le vitrage translucide et le panneau solaire.

Avantageusement, l'élément comporte des sources lumineuses disposées entre le vitrage translucide et le panneau translucide.

Selon une forme d'exécution, les sources lumineuses sont intégrées au vitrage translucide.

Selon une variante d'exécution, l'élément comporte un caisson à l'intérieur duquel sont disposées les sources lumineuses, le caisson étant disposé entre le vitrage translucide et le panneau translucide.

Ainsi, un tel élément autorise un effet de transparence lorsque le panneau solaire est lui-même transparent avec des jeux de lumières possibles (lorsque le vitrage est équipé de sources de lumineuses ou encore lorsqu'il est coloré) avec les réflexions successives entre le vitrage translucide, le panneau translucide et le panneau solaire.

La transparence s'entend ici dans le domaine visible.

Avantageusement, le panneau translucide comporte une pluralité d'alvéoles ménagées en son sein, et la pluralité d'alvéoles est munie d'un isolant thermique translucide.

Selon une forme d'exécution, chaque panneau solaire est monté sur les moyens de maintien, de préférence par collage de type Verre Extérieur Collé.

Ainsi, chaque panneau solaire est solidarisé indirectement au cadre et/ou à l'armature par l'intermédiaire des moyens de maintien. Par ailleurs, un tel agencement de chaque panneau solaire sur les moyens de maintien permet d'éviter la formation d'ombres portées.

Selon une caractéristique, les moyens de maintien sont réalisés sous la forme de profilés, de préférence en aluminium.

Avantageusement, les profilés formant moyens de maintien sont conformés pour recevoir au moins un store.

Selon une forme d'exécution, le cadre et l'armature sont réalisés sous la forme de profilés, de préférence en aluminium.

Ainsi, de tels profilés permettent d'obtenir un cadre et une armature à moindre coût.

Dans un mode de réalisation, chaque panneau solaire est monté sur le cadre et/ou l'armature et les moyens de maintien sont agencés pour plaquer chaque panneau solaire contre le cadre et/ou l'armature.

Selon une forme d'exécution, les moyens de maintien comportent une pluralité d'organes de maintien, chaque organe de maintien étant agencé pour plaquer un bord d'un panneau solaire contre le cadre et/ou l'armature.

Ainsi, de tels moyens de maintien coopèrent avec le cadre et/ou l'armature afin d'enserrer chaque panneau solaire.

Avantageusement, la pluralité d'organes de maintien comprend au moins un organe de maintien agencé pour plaquer deux bords adjacents de deux panneaux solaires contre un bras de l'armature.

Ainsi, un seul organe de maintien permet d'assurer une jonction entre deux panneaux solaires adjacents, ce qui permet de faciliter l'intégration des panneaux solaires et de réduire le temps d'opération, *a fortiori* lorsque le nombre de panneaux solaires à intégrer est important.

Selon une forme d'exécution, le cadre et l'armature sont réalisés en bois, de préférence sous la forme de panneaux à lamelles minces orientées.

Ainsi, un tel cadre et une telle armature en bois permettent de réduire significativement les déperditions thermiques à travers l'élément de façade. En outre, les panneaux à lamelles minces orientées présentent une excellente tenue mécanique.

Préférentiellement, au moins une des ouvertures forme une baie destinée à recevoir un ouvrant ou une surface vitrée.

Dans un mode de réalisation, l'élément comporte au moins une cloison et une contre-cloison montées à l'intérieur du cadre de sorte à délimiter une première enceinte destinée à être équipée d'un isolant thermique, la cloison étant disposée en regard du ou de chaque panneau solaire.

Ainsi, la cloison et la contre-cloison sont intégrées directement en usine au cadre de l'élément de façade. La cloison et la contre-cloison délimitent une première enceinte destinée à contenir un isolant thermique afin de réduire la déperdition d'énergie à travers l'élément de façade.

Avantageusement, l'élément comporte une plaque de parement montée à l'intérieur du cadre et disposée en regard de la contre-cloison hors de la première enceinte, de sorte à délimiter une seconde enceinte de préférence destinée à être équipée d'un isolant thermique.

Ainsi, outre sa fonction esthétique, la plaque de parement en conjugaison avec la contre-cloison délimite une seconde enceinte destinée à contenir un isolant thermique afin de réduire la déperdition d'énergie à travers l'élément de façade.

Avantageusement, l'élément comporte des moyens de ventilation à double flux destinés à ventiler l'intérieur de la façade.

Avantageusement, l'élément comporte au moins un conduit destiné à recevoir un fluide caloporteur, chaque conduit étant agencé pour coopérer avec chaque panneau solaire.

Ainsi, un tel conduit permet de récupérer l'énergie captée par le panneau solaire correspondant afin de la restituer ultérieurement, par exemple par l'intermédiaire d'un échangeur thermique.

Dans un mode de réalisation, le cadre présente une face externe, destinée à être orientée vers la façade, la face externe comportant un premier aménagement destiné à recevoir des premiers moyens d'étanchéité.

Avantageusement, le cadre présente une face interne, opposée à la face externe, la face interne comportant un deuxième aménagement destiné à recevoir des deuxièmes moyens d'étanchéité.

La présente invention se rapporte également à une façade préfabriquée remarquable en ce qu'elle comporte au moins deux éléments conformes à l'invention, et des premiers moyens d'étanchéité comprenant :
- deux premiers profilés d'étanchéité montés respectivement dans un premier aménagement d'un élément,
- un premier joint d'étanchéité monté sur les deux premiers profilés d'étanchéité de manière à assurer l'étanchéité entre les faces externes des cadres des deux éléments.

Dans un mode de réalisation, la façade préfabriquée comporte deux éléments conformes à l'invention, et des deuxièmes moyens d'étanchéité comprenant :
- deux deuxièmes profilés d'étanchéité montés respectivement dans un deuxième aménagement d'un élément,
- un deuxième joint d'étanchéité monté sur les deux deuxièmes profilés d'étanchéité de manière à assurer l'étanchéité entre les faces internes des cadres des deux éléments.

Avantageusement, une des ouvertures d'un élément forme une baie conformée pour recevoir une surface vitrée, et ledit élément comporte un profilé dit d'ajustement sur lequel est montée la surface vitrée, la géométrie du profilé d'ajustement étant adaptée de sorte que la surface vitrée et chaque panneau solaire sont sensiblement coplanaires.

D'autres caractéristiques et avantages apparaîtront dans la description qui va suivre de différents modes de réalisation d'un élément de façade préfabriqué et d'une façade préfabriquée selon l'invention, donnés à titre d'exemples non limitatifs, en référence aux dessins annexés dans lesquels :
- la figure 1 est une vue d'ensemble en perspective d'un élément selon un premier mode de réalisation,
- la figure 2 est une vue schématique en perspective éclatée de l'élément illustré à la figure 1,
- la figure 3 est une vue partielle en coupe horizontale de l'élément illustré à la figure 1,
- la figure 4 est une vue partielle en coupe horizontale d'un assemblage entre deux éléments selon le premier mode de réalisation,
- la figure 5 est une vue partielle en coupe horizontale d'un élément selon un deuxième mode de réalisation,
- la figure 6 est une vue partielle en coupe verticale d'un élément selon un troisième mode de réalisation,
- la figure 7 est une vue partielle en coupe verticale d'une façade préfabriquée illustrant la jonction entre deux éléments selon le troisième mode de réalisation,
- la figure 8 est une vue partielle en coupe horizontale d'une façade préfabriquée illustrant la jonction entre deux éléments selon le troisième mode de réalisation,
- la figure 9 est une vue analogue à la figure 8 illustrant la jonction entre deux éléments selon un autre mode de réalisation,
- la figure 10 est une vue analogue à la figure 8 illustrant la jonction entre deux éléments selon un autre mode de réalisation.

Pour les différents modes de réalisation, les mêmes références seront utilisées pour des éléments identiques ou assurant la même fonction, par souci de simplification de la description.

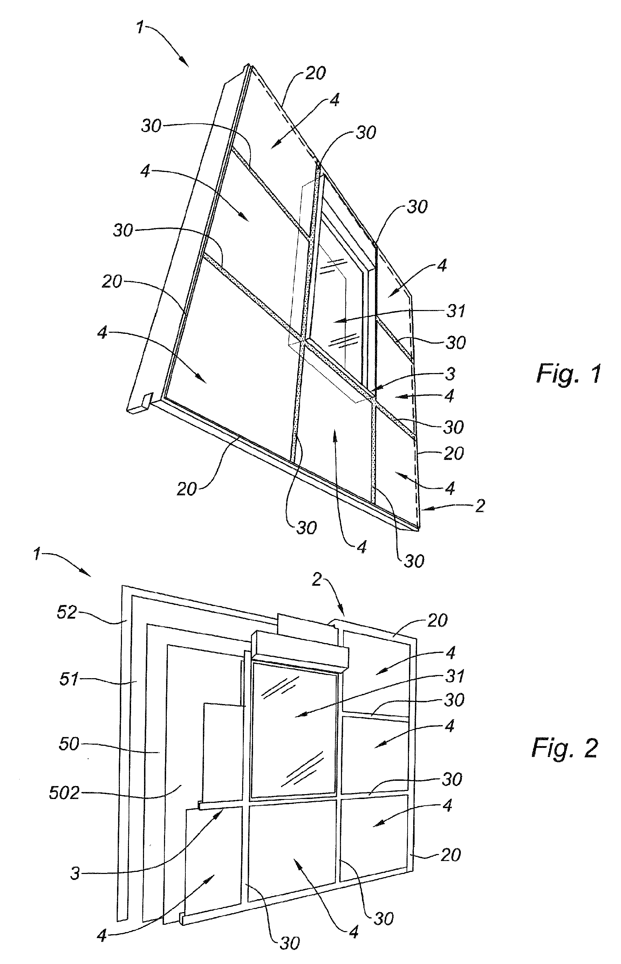

L'élément 1 de façade préfabriqué illustré aux figures 1 à 3 comporte :
- un cadre 2 de support,
- une armature 3 montée à l'intérieur du cadre 2, comportant huit bras et délimitant huit ouvertures,
- des panneaux photovoltaïques 4,
- des moyens de maintien fixés sur le cadre 2 et/ou l'armature 3 et agencés pour maintenir en position chaque panneau photovoltaïque 4 en regard d'une ouverture.

Le cadre 2 de support est sensiblement rectangulaire. Le cadre 2 est formé par un assemblage de quatre premiers profilés 20 métalliques, de préférence en aluminium.

L'armature 3, métallique, est fixée à l'intérieur du cadre 2. L'armature 3 comporte huit bras, chacun réalisé sous la forme de seconds profilés 30. Les seconds profilés 30 sont métalliques, de préférence en aluminium. Les seconds profilés 30 de l'armature 3 délimitent huit ouvertures sensiblement rectangulaires et une baie équipée d'une fenêtre 31.

Plus précisément, l'élément 1 comporte sept panneaux photovoltaïques 4 sensiblement de forme rectangulaires, et montés sur le cadre 2 et/ou sur l'armature 3. Chaque panneau photovoltaïque 4 est conformé pour recouvrir une ouverture de sorte que l'élément 1 présente une face externe étanche. Par «externe» (respectivement « interne »), on entend une orientation vers l'extérieur (respectivement l'intérieur) de la façade lorsque l'élément 1 est installé sur le site de construction.

L'élément 1 comporte une pluralité de capots 6 formant des moyens de maintien agencés pour maintenir en position chaque panneau photovoltaïque 4 en regard d'une ouverture. A cet égard, chaque capot 6 est agencé pour plaquer un bord 40 d'un panneau photovoltaïque 4 contre le cadre 2 et/ou l'armature 3.

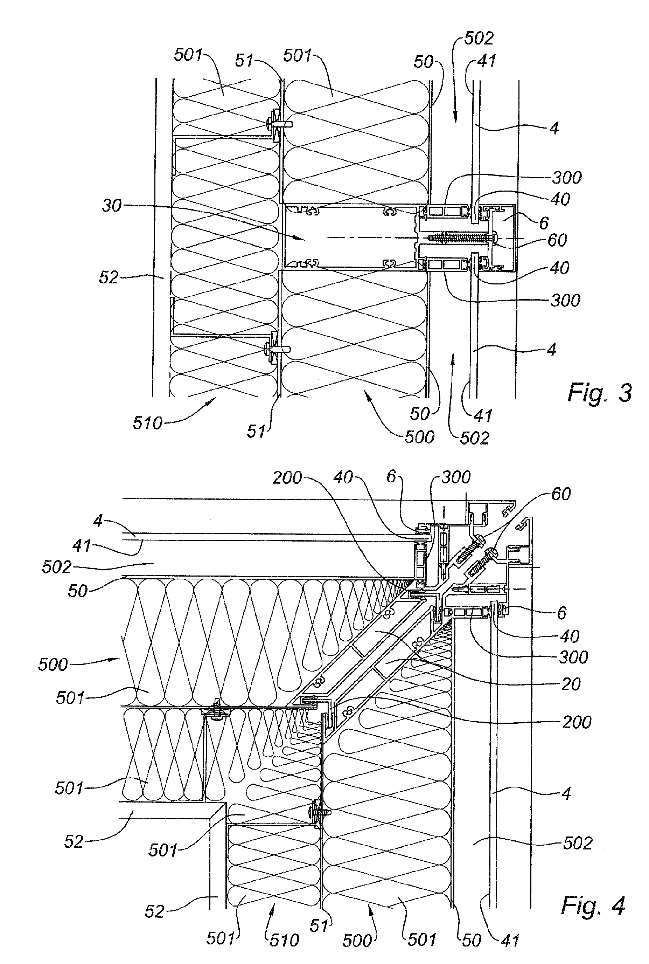

Plus précisément, comme illustré à la figure 3, chaque second profilé 30 de l'armature 3 est équipé de deux entretoises 300 sur chacune desquelles vient en appui un bord 40 d'un panneau photovoltaïque 4. Par suite, un capot 6 est agencé pour plaquer deux bords 40 adjacents des panneaux photovoltaïques 4 contre des deux entretoises 300 de l'armature 3. Les capots 6 sont fixés aux seconds profilés 30 par l'intermédiaire de vis d'assemblage 60, solidarisant par là-même les panneaux photovoltaïques 4 à l'armature 3.

Comme illustré à la figure 4, chacun des premiers profilés 20 du cadre 2 d'un élément 1 présente à leurs extrémités une section transversale à 45° afin de joindre un second élément 1 selon l'invention. Les premiers profilés 20 des deux éléments 1 sont reliés entre eux par des équerres de fixation 200.

Les panneaux photovoltaïques 4 utilisent de préférence des cellules dites « à couches tandem », c'est-à-dire comportant un empilement de d'une couche interne et d'une couche externe réalisées respectivement en silicium microcristallin et en silicium amorphe. Ce type de panneaux photovoltaïques peut capter un rayonnement lumineux sur un spectre étendu, permettant d'obtenir un rendement supérieur à des panneaux photovoltaïques standard.

Comme illustré aux figures 2 à 4, l'élément 1 comporte au moins une cloison 50 et une contre-cloison 51 montées à l'intérieur du cadre 2. La cloison 50 et la contre-cloison 51 sont réalisées par exemple en fibre de bois.

La cloison 50 et la contre-cloison 51 délimitent une première enceinte 500. La première enceinte 500 est équipée d'un isolant thermique 501, par exemple de la laine minérale rigide.

La cloison 50 est disposée en regard de la face interne 40 de chaque panneau photovoltaïque 4 de sorte à laisser une lame d'air 502 entre la cloison 50 et la face interne 40 du panneau photovoltaïque 4.

La contre-cloison 51 est quant à elle disposée en regard de la face interne de la cloison 50.

Une ouverture est ménagée dans la cloison 50 et la contre-cloison 51 de sorte à coïncider sensiblement avec la baie.

Par ailleurs une plaque de parement 52 est montée à l'intérieur du cadre 2 et disposée en regard de la face interne de la contre-cloison 51 de sorte à délimiter une seconde enceinte 510. La seconde enceinte 510 est équipée d'un isolant thermique, par exemple de la laine minérale rigide. La plaque de parement est par exemple réalisée en plâtre.

L'élément 1 peut également comporter des moyens de ventilation (non représentés) à double flux destinés à ventiler l'intérieur de la façade.

L'élément 1 peut également comporter au moins un conduit (non représenté) destiné à recevoir un fluide caloporteur, chaque conduit étant agencé pour coopérer avec chaque panneau photovoltaïque 4.

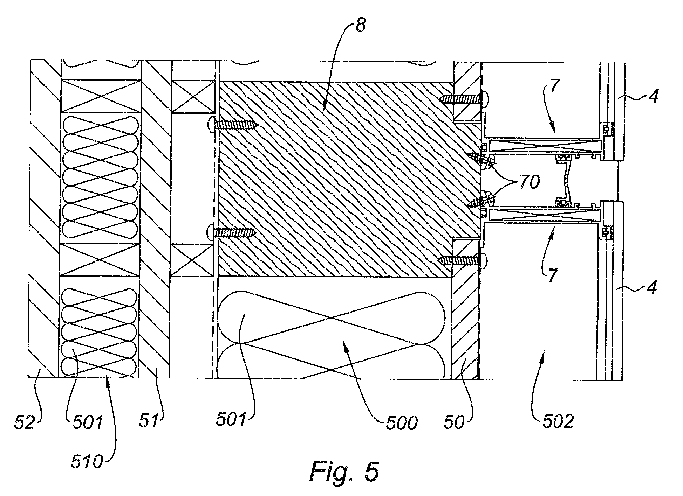

Selon un mode de réalisation illustré à la figure 5, l'élément 1 diffère de l'élément 1 illustré aux figures 1 à 3 en ce que :
- le cadre 2 et l'armature 3 sont réalisés respectivement sous la forme d'un cadre en bois et de panneaux 8 en bois, de préférence sous la forme de panneaux à lamelles minces orientées,
- les moyens de maintien comportent des profilés 7, de préférence en aluminium, fixés sur le cadre 2 et/ou l'armature 3 par l'intermédiaire de vis d'assemblage 70,
- chaque panneau photovoltaïque 4 est fixé par collage sur les profilés 7 formant moyens de maintien, de préférence par collage de type Verre Extérieur Collé.

Le fait que chaque panneau photovoltaïque 4 soit rapporté sur les profilés 7 permet de s'affranchir des capots 6 et par là-même de la formation d'ombres portées.

En outre, la présence des panneaux 8 en bois permet de limiter considérablement les déperditions thermiques relativement aux capots 6 surmontant les seconds profilés 30 en aluminium. Selon un mode de réalisation non représenté, l'élément 1 diffère en ce qu'au moins une ouverture n'est pas équipée d'un panneau photovoltaïque 4. La ou chaque ouverture est alors équipée d'un panneau conformé pour recouvrir ladite ouverture, le panneau pouvant être par exemple en bois naturel, composite, ou encore en verre émaillé.

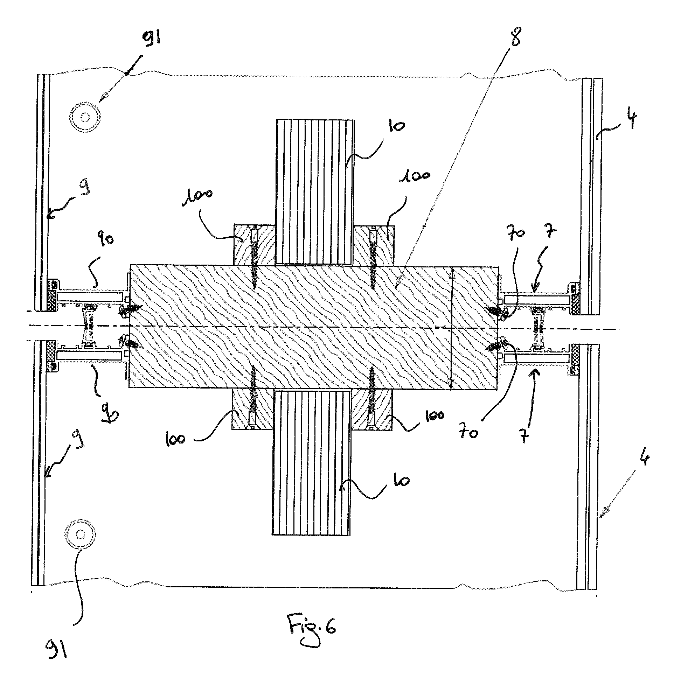

Selon un mode de réalisation illustré à la figure 6, l'élément 1 diffère de l'élément illustré à la figure 5 en ce qu'il comporte :
- un vitrage translucide 9 monté sur le cadre 2 et/ou l'armature 3 en regard d'un panneau solaire 4, et équipée de sources lumineuses 91,
- un panneau translucide 10, de préférence réalisé en polycarbonate, monté sur le cadre 2 et/ou l'armature 3 entre le vitrage translucide 9 et le panneau solaire 4 correspondant.

Plus précisément, le vitrage translucide 9 est collé sur des profilés 90, de préférence par collage de type Verre Extérieur Collé. Les profilés 90, pouvant être en aluminium, sont fixés par vissage au panneau 8 en bois, de préférence du type à lamelles minces orientées.

Le panneau translucide 10 est fixé au panneau 8 aux moyens de tasseaux 100 vissés au panneau 8.

Le panneau translucide 10 comporte une pluralité d'alvéoles (non représentées) ménagées en son sein. La pluralité d'alvéoles est munie d'un isolant thermique translucide, tel que le nanogel®.

Afin d'assurer un effet de transparence, les panneaux 4 solaires présentent :
- un verre collé extérieur adapté,
- un verre collé intérieur adapté.

Ainsi, le verre collé extérieur peut être feuilleté ou trempé. Le verre collé extérieur est réfléchissant. Celui-ci comporte :
- un verre trempé ou durci réfléchissant pouvant être remplacé par un verre trempé ou durci extra clair,
- un intercalaire en polyvinyle butyrale pouvant notamment être remplacé par l'éthylène-acétate de vinyle ou tout autre intercalaire transparent,
- un verre trempé ou durci clair.

L'intercalaire peut encapsuler des cellules photovoltaïques monocristallines perforées, monocristallines opaques, ou polycristallines montées en série par groupes de cellules reliés à une diode et à des connecteurs. L'espacement des cellules photovoltaïques détermine la transmission lumineuse du verre collé extérieur. Le verre collé extérieur est collé sur un cadre aluminium avec un espaceur et un silicone naturel.

Le verre collé intérieur comporte un vitrage feuilleté avec un intercalaire translucide opale, sérigraphié ou imprimé ou tout autre verre feuilleté dépoli, trempé ou non. Le verre collé intérieur est collé sur un cadre aluminium avec un espaceur et un silicone naturel.

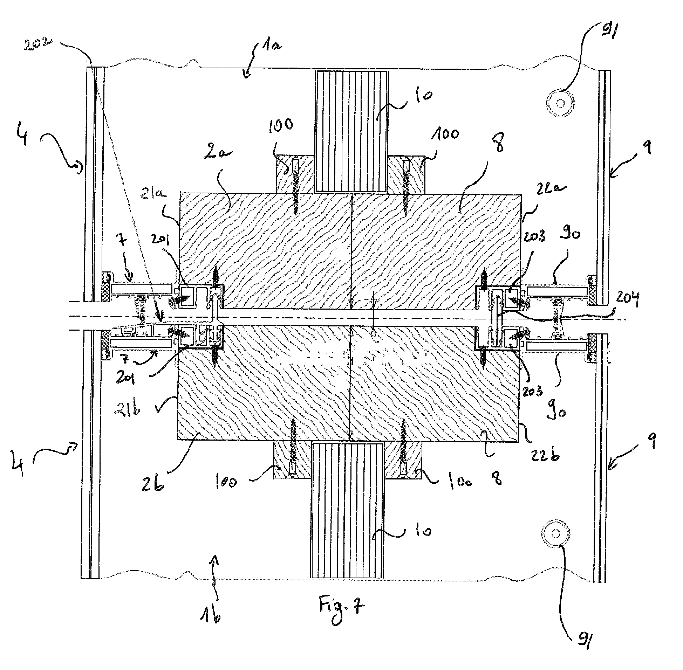

Dans les modes de réalisation illustrés aux figures 7 à 10, la façade préfabiquée comporte deux éléments 1 a, 1b comportant respectivement un cadre 2a, 2b présentant chacun une face externe 21 a, 21 b, destinée à être orientée vers la façade, c'est-à-dire vers l'extérieur du bâtiment.

Chaque face externe 21 a, 21 b comporte un premier aménagement conformée pour recevoir des premiers moyens d'étanchéité. Les premiers moyens d'étanchéité comportent :
- un premier profilé d'étanchéité 201 monté dans le premier aménagement de chaque face externe 21 a, 21 b,
- un premier joint d'étanchéité 202 monté sur les premiers profilés d'étanchéité 201 de manière à assurer l'étanchéité entre les faces externes 21 a, 21 b des cadres 2a, 2b des deux éléments 1 a, 1 b.

A cet effet, chaque premier profilé d'étanchéité 201 comporte des parois délimitant un compartiment conformé pour recevoir le premier joint d'étanchéité 202.

Les cadres 2a, 2b des éléments 1a, 1 b comportent respectivement une face interne 22a, 22b opposée à la face externe correspondante 21 a, 21 b. Chaque face interne 22a, 22b comporte un deuxième aménagement conformée pour recevoir des deuxièmes moyens d'étanchéité. Les deuxièmes moyens d'étanchéité comportent :
- un deuxième profilé d'étanchéité 203 monté dans le deuxième aménagement de chaque face interne 22a, 22b,
- un deuxième joint d'étanchéité 204 monté sur les deuxièmes profilés 203 de manière à assurer l'étanchéité entre les faces internes 22a, 22b des cadres 2a, 2b des deux éléments 1a, 1 b.

A cet effet, chaque deuxième profilé d'étanchéité 203 comporte des parois délimitant un compartiment conformé pour recevoir le deuxième joint d'étanchéité 204.

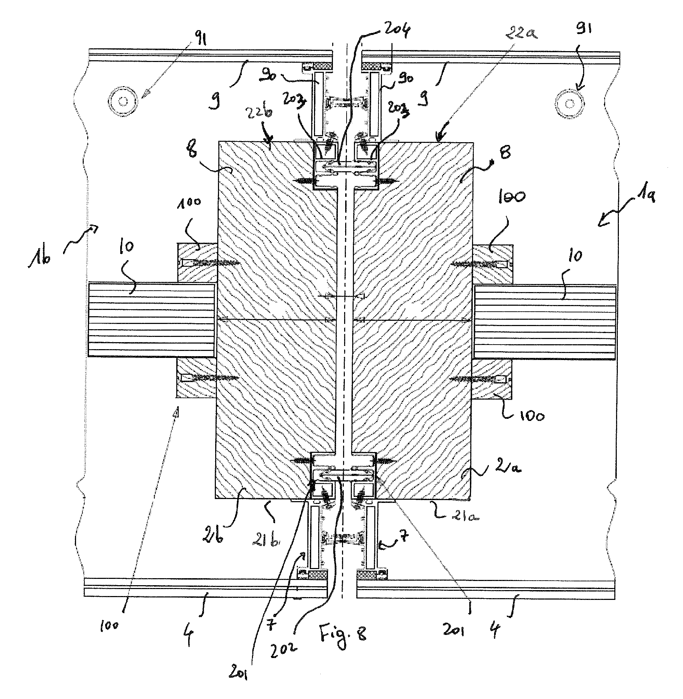

En figure 7 est illustré une étanchéité horizontale tandis qu'une étanchéité verticale est illustrée à la figure 8. Le premier joint d'étanchéité 202 diffère pour l'étanchéité verticale relativement à l'étanchéité horizontale en ce qu'il est de type « casquette ». Ainsi, ce premier joint d'étanchéité 202 comporte une pluralité de lèvres qui viennent s'engager dans les compartiments des profilés d'étanchéité 201 et venant s'encliqueter sur les profilés 7 formant moyens de maintien des panneaux solaires 4.

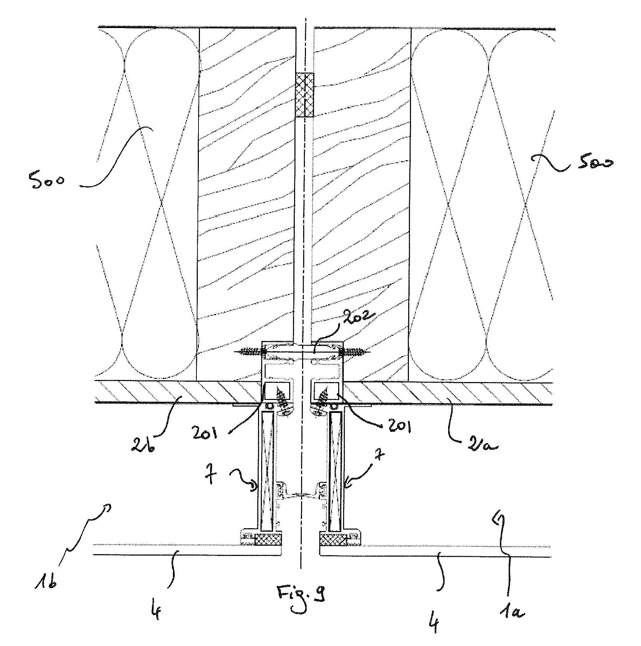

En figure 9, est illustrée une variante d'étanchéité horizontale en l'absence de panneau translucide 10 remplacé par une couche formant un isolant thermique 500.

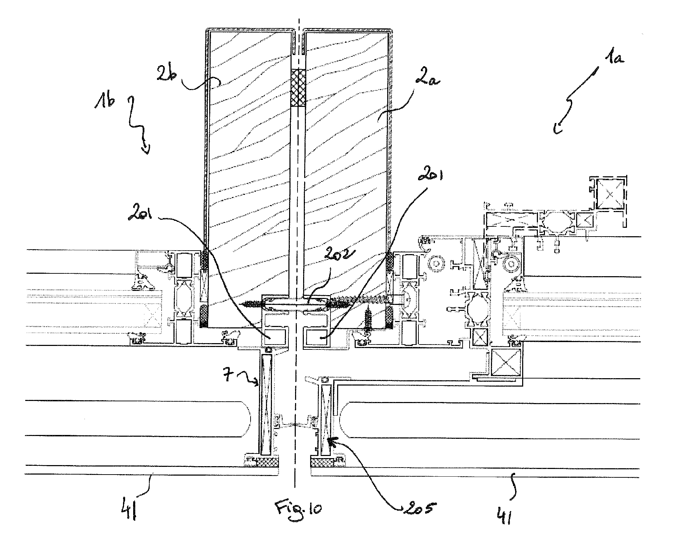

Dans le mode de réalisation illustré à la figure 10, une des ouvertures des éléments 1a, 1b forme une baie conformée pour recevoir une surface vitrée 41. L'élément 1a comporte un profilé d'ajustement 205, pouvant être en aluminium, présentant une géométrie adaptée de sorte que les surfaces vitrées 41 et chaque panneau solaire 4 sont sensiblement coplanaires, et ce pour des raisons esthétiques.

Bien entendu, les modes de réalisation de l'invention décrits ci-dessus ne présentent aucun caractère limitatif. Des détails et améliorations peuvent y être apportés dans d'autres variantes d'exécution sans pour autant sortir du cadre de l'invention.

C'est ainsi notamment que le nombre des seconds profilés 30 et leur disposition sur l'armature 3 peuvent être modulables de sorte à varier la forme des ouvertures qu'ils délimitent.

## Revendications

1. Elément (1, 1a, 1 b) de façade préfabriqué **caractérisé en ce qu'**il comporte :
- un cadre (2) de support,
- une armature (3) montée à l'intérieur du cadre, comportant au moins un bras et délimitant au moins deux ouvertures,
- au moins un panneau solaire (4) conformé pour recouvrir au moins l'une des ouvertures,
- des moyens de maintien fixés sur le cadre (2) et/ou l'armature (3) et agencés pour maintenir en position chaque panneau solaire (4) en regard d'au moins une des ouvertures.

2. Elément (1, 1a, 1b) selon la revendication 1, **caractérisé en ce qu'**il comporte :
- un vitrage translucide (9) monté sur le cadre (2) et/ou l'armature (3) en regard du panneau solaire (4),
- un panneau translucide (10), de préférence réalisé en polycarbonate, monté sur le cadre (2) et/ou l'armature (3) entre le vitrage translucide (9) et le panneau solaire (4).

3. Elément (1, 1a, 1b) selon la revendication 2, **caractérisé en ce qu'**il comporte des sources lumineuses (91) disposées entre le vitrage translucide (9) et le panneau translucide (10).

4. Elément (1, 1a, 1 b) selon la revendication 2 ou 3, **caractérisé en ce que** le panneau translucide (10) comporte une pluralité d'alvéoles ménagées en son sein, et **en ce que** la pluralité d'alvéoles est munie d'un isolant thermique translucide.

5. Elément (1, 1a, 1b) selon l'une des revendications 1 à 4, **caractérisé en ce que** chaque panneau solaire (4) est monté sur les moyens de maintien, de préférence par collage de type Verre Extérieur Collé.

6. Elément (1, 1a, 1b) selon l'une des revendications 1 à 5, **caractérisé en ce que** les moyens de maintien sont réalisés sous la forme de profilés (7), de préférence en aluminium.

7. Elément (1, 1a, 1 b) selon l'une des revendications 1 à 4, **caractérisé en ce que** chaque panneau solaire (4) est monté sur le cadre (2) et/ou l'armature (3), et **en ce que** les moyens de maintien sont agencés pour plaquer chaque panneau solaire (4) contre le cadre (2) et/ou l'armature (3).

8. Elément (1, 1a, 1 b) selon la revendication 7, **caractérisé en ce que** les moyens de maintien comportent une pluralité d'organes de maintien (6), chaque organe de maintien étant agencé pour plaquer un bord (40) d'un panneau solaire (4) contre le cadre (2) et/ou l'armature (3).

9. Elément (1, 1a, 1 b) selon la revendication 8, **caractérisé en ce que** la pluralité d'organes de maintien comprend au moins un organe de maintien (6) agencé pour plaquer deux bords (40) adjacents de deux panneaux solaires (4) contre un bras de l'armature (3).

10. Elément (1, 1a, 1b) selon l'une des revendications 1 à 9, **caractérisé en ce que** le cadre (2) et l'armature (3) sont réalisés en bois, de préférence sous la forme de panneaux (8) à lamelles minces orientées.

11. Elément (1, 1a, 1 b) selon l'une des revendications 1 à 10, **caractérisé en ce qu'**au moins une des ouvertures forme une baie destinée à recevoir un ouvrant (31) ou une surface vitrée (41).

12. Elément (1, 1a, 1 b) selon l'une des revendication 1 à 11, **caractérisé en ce que** le cadre (2a, 2b) présente une face externe (21 a, 21 b), destinée à être orientée vers la façade, la face externe comportant un premier aménagement destiné à recevoir des premiers moyens d'étanchéité.

13. Elément (1, 1a, 1 b) selon la revendication 12, **caractérisé en ce que** le cadre (2a, 2b) présente une face interne (22a, 22b), opposée à la face externe (21 a, 21 b), la face interne comportant un deuxième aménagement destiné à recevoir des deuxièmes moyens d'étanchéité.

14. Façade préfabriquée **caractérisée en ce qu'**elle comporte au moins deux éléments (1a, 1 b) selon la revendication 12 ou 13, et des premiers moyens d'étanchéité comprenant :
- deux premiers profilés d'étanchéité (201) montés respectivement dans un premier aménagement d'un élément (1),
- un premier joint d'étanchéité (202) monté sur les deux premiers profilés d'étanchéité (201) de manière à assurer l'étanchéité entre les faces externes (21 a, 21 b) des cadres (2a, 2b) des deux éléments (1 a, 1 b).

15. Façade préfabriquée selon la revendication 14, **caractérisée en ce qu'**elle comporte deux éléments (1a, 1 b) selon la revendication 13, et des deuxièmes moyens d'étanchéité comprenant :
- deux deuxièmes profilés d'étanchéité (203) montés respectivement dans un deuxième aménagement d'un élément (1),
- un deuxième joint d'étanchéité (204) monté sur les deux deuxièmes profilés d'étanchéité (203) de manière à assurer l'étanchéité entre les faces internes (22a, 22b) des cadres (2a, 2b) des deux éléments (1 a, 1 b).

16. Façade préfabriquée selon la revendication 14 ou 15, **caractérisée en ce qu'**une des ouvertures d'un élément (1) forme une baie conformée pour recevoir une surface vitrée (41), et **en ce que** ledit élément (1) comporte un profilé dit d'ajustement sur lequel est montée la surface vitrée (41), la géométrie du profilé d'ajustement étant adaptée de sorte que la surface vitrée (41) et chaque panneau solaire (4) sont sensiblement coplanaires.
